Europäisches Patentamt

European Patent Office

Office européen des brevets

(19)

(11) Publication number : **0 473 492 A2**

# (12) EUROPEAN PATENT APPLICATION

(21) Application number : **91402241.3**

(51) Int. Cl.⁵ : **G11B 11/10**

(22) Date of filing : **13.08.91**

(30) Priority : **27.08.90 JP 224850/90**

(43) Date of publication of application :
**04.03.92 Bulletin 92/10**

(84) Designated Contracting States :
**DE FR GB**

(71) Applicant : **Shin-Etsu Chemical Co., Ltd.**
**6-1, Otemachi 2-chome**
**Chiyoda-ku Tokyo 100 (JP)**

(72) Inventor : **Tawara, Yoshio**
**310-3, Kurosuda-cho, Midori-ku**
**Yokohama-shi, Kanagawa-ken (JP)**

Inventor : **Tokunaga, Katsushi**
**9-2-18, Arima, Miyamae-ku**
**Kawasaki-shi, Kanagawa-ken (JP)**
Inventor : **Eijima, Seiki**
**9-2-18, Arima, Miyamae-ku**
**Kawasaki-shi, Kanagawa-ken (JP)**
Inventor : **Fukuda, Kunio**
**259 Shimosakunobe, Takatsu-ku**
**Kawasaki-shi, Kanagawa-ken (JP)**
Inventor : **Takaya, Seiki**
**22-712, Nagatsuda 1-chome, Midori-ku**
**Yokohama-shi, Kanagawa-ken (JP)**
Inventor : **Sukaguchi, Susumu**
**3-28-4, Utsukushigaoka, Midori-ku**
**Yokohama-shi, Kanagawa-ken (JP)**

(74) Representative : **Armengaud, Alain et al**
**Cabinet ARMENGAUD AINE 3, Avenue**
**Bugeaud**
**F-75116 Paris (FR)**

(54) **Improvement in magneto-optical recording medium.**

(57) An improvement in the stability and durability can be obtained in a magneto-optical recording medium having a multi-layered structure consisting of a transparent substrate plate, a first dielectric layer, a magnetic layer, a second dielectric layer and a reflecting layer by providing a protective coating film on the surface of the substrate plate opposite to the first dielectric layer with an inorganic substance selected from the group consisting of silicon nitride, silicon carbide, titanium dioxide, indium-tin oxide, silicon nitride containing hydrogen, silicon carbide containing hydrogen, silicon carbide nitride containing hydrogen, calcium fluoride and magnesium fluoride.

FIG. 1

## BACKGROUND OF THE INVENTION

The present invention relates to an improvement in a magneto-optical recording medium or, more particularly, to an improvement in a magneto-optical recording medium by which the recording medium is imparted with excellent stability against heat and chemicals, high resistance against moisture, high optical transparency and large mechanical strengths by virtue of a protective coating film formed on the surface of the transparent substrate plate.

Along with the rapid progress of information-directed society in recent years, magneto-optical memory devices are highlighted as a recording medium due to the rewritability. A magneto-optical recording medium has a multi-layered structure formed by providing a first dielectric layer, ferrimagnetic layer, second dielectric layer and reflecting layer successively on the surface of an optically transparent substrate plate which is usually made from a polycarbonate resin, polyolefin resin and the like having high light transmission. Such a plastic-made substrate is defective in respect of the low hardness, low abrasion resistance, resistance against chemicals and moisture and low C/N ratio of the regenerative signals, though advantageous in respect of light weight and inexpensiveness.

Therefore, it is practiced to provide a protective coating film to the plastic-made substrate plate by coating the surface with an ultraviolet-curable resin followed by irradiation of the coating film with ultraviolet light to effect curing of the resin. Conventional ultraviolet-cured resins, however, are not quite satisfactory because they are rather poor in the resistance against moisture and chemicals, mechanical strengths, thermal stability and light transmission so that it is eagerly desired to develop a novel protective coating material satisfactory in these regards.

## SUMMARY OF THE INVENTION

The present invention accordingly has an object to provide an improvement in a magneto-optical recording medium by which the above mentioned problems and disadvantages in the prior art magneto-optical recording media, in particular, having a plastic-made substrate plate can be dissolved.

Thus, the present invention provides an improvement, in a magneto-optical recording medium having a multi-layered structure by forming a first dielectric layer, a ferrimagnetic layer, a second dielectric layer and a reflecting layer on the surface of a transparent substrate plate made from a plastic resin, which comprises: forming a protective coating film, on the surface of the substrate plate opposite to the surface in contact with the first dielectric layer, from an inorganic substance selected from the group consisting of silicon nitride, silicon carbide, titanium dioxide, indium-tin oxide, silicon nitride containing hydrogen, silicon carbide containing hyrogen, silicon carbide nitride containing hydrogen, calcium fluoride and magnesium fluoride.

Such a protective coating film of the specified inorganic substance can be formed efficiently by the method of sputtering, chemical vapor-phase deposition or vacuum vapor deposition or, preferably, by the method of sputtering.

## BRIEF DESCRIPTION OF THE DRAWING

Figure 1 schematically illustrates a cross sectional view of the multi-layered structure of the magneto-optical recording medium according to the invention.

Figure 2 graphically shows the decrease in the coercive force of the ferrimagnetic layer of magneto-optical recording media provided with a protective coating layer of different substances according to the invention in the lapse of time by aging.

## DETAILED DESCRIPTION OF THE PREFERRED EMBODIMENTS

As is described above, the improvement of the present invention can be obtained by providing the surface of the transparent substrate plate with a protective coating film of a specific inorganic substance mentioned above. When such a protective coating film, which is very firmly adherent to the surface of the substrate, is formed on the surface of the substrate plate opposite to the surface in contact with the first dielectric layer, the magneto-optical recording medium can be imparted with greatly increased resistance against moisture and chemicals, mechanical strengths and thermal stability as well as surface hardness. The coating film, moreover, has excellent light transmission, in particular, in the visible to infrared region and the above mentioned specific inorganic substances as the material of the protective coating film each have a refractive index close to that of the plastic-made substrate plate so that the performance of the magneto-optical recording medium is never decreased thereby. This advantage is particularly remarkable when the refractive index and thickness of the protective coating film are so designed that the amplification reflectivity of the coating film is zero for the light of a specified wavelength.

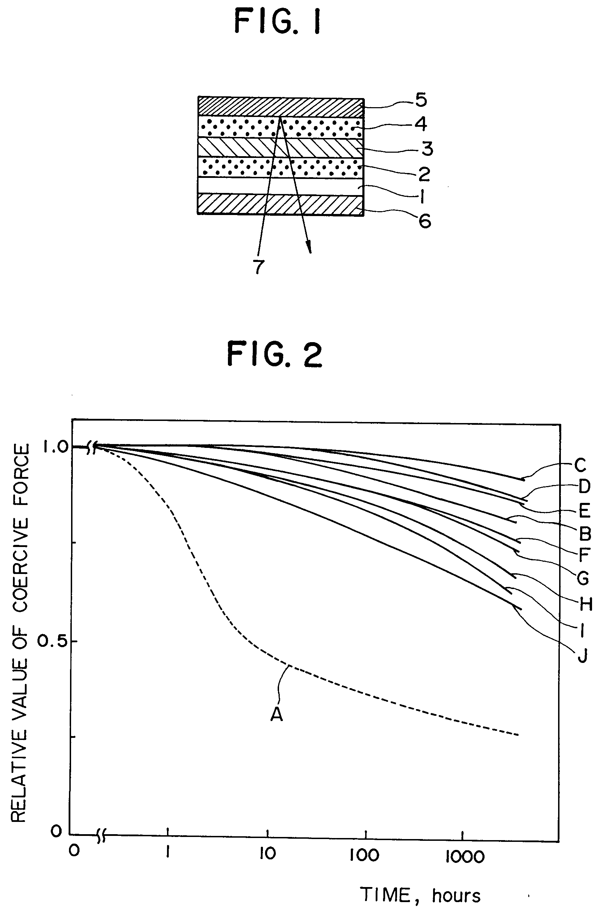

The magneto-optical recording medium as the subject body of the inventive improvement has a multi-layered structure as is illustrated in Figure 1 by a cross section, in which a transparent substrate plate 1 made from a polycarbonate resin, polyolefin resin, poly(methyl methacrylate) resin and the like is successively coated with a first transparent dielectric layer 2 of silicon nitride, silicon carbide, silicon nitride containing hydrogen, silicon carbide containing hydrogen, silicon carbide nitride containing hydrogen and the like having a thickness of 20 to 300 nm, a magnetic layer 3 of an amorphous ferrimagnetic alloy which is a combination of at least one rare earth element, e.g., terbium, dysprosium, gadolinium, neodymium and the like, and at least one transition metal element, e.g., iron, cobalt, nickel and the like, such as those of terbium and iron, terbium, iron and cobalt, gadolinium, dysprosium, iron and cobalt and the like in a thickness of 20 to 100 nm, a second dielectric layer 4 which can be made from the same substance and has about the same thickness as the first dielectric layer 2 and a reflecting layer 5 made from a metal such as aluminum, copper, gold, silver and the like having a thickness of 30 to 100 nm. The method for forming each of these layers 2, 3, 4, 5 is well known in the art. Alternatively, reflecting layer 5 in the above described multi-layered structure can be omitted when the magnetic layer 3 has such a thickness that the incident light 7 on the opposite surface of the substrate plate 1 can be reflected at the surface thereof. Further alternatively, the first dielectric layer 2 in the above described multi-layered structure can be omitted when the substrate plate 1 has a dielectric property also to serve as a dielectric layer.

According to the invention, a protective coating film 6 of a specific inorganic substance is formed on the surface of the substrate plate 1 opposite to the first dielectric layer 2 or, when the first dielectric layer 2 is omitted, to the magnetic layer 3 having a thickness of 10 to 2000 nm or, preferably, 20 to 300 nm. The inorganic substance forming the protective coating film 6 is selected from the group consisting of silicon nitride, silicon carbide, titanium dioxide, indium-tin oxide, silicon nitride containing hydrogen, silicon carbide containing hydrogen, silicon carbide nitride containing hydrogen, calcium fluoride and magnesium fluoride. The coating film of such an inorganic substance can be formed by the method of sputtering, chemical vapor deposition or vacuum vapor deposition well known in the art.

Among the above named inorganic substances forming the protective coating film 6, the molar content of silicon in the silicon nitride, silicon carbide, silicon nitride containing hydrogen, silicon carbide containing hydrogen and silicon carbide nitride containing hydrogen should be in the range from 30% to 70%. Further, the molar content of hydrogen in the silicon nitride containing hydrogen, silicon carbide containing hydrogen and silicon carbide nitride containing hydrogen should be in the range from 2% to 50%. The protective coating film 6 formed from these inorganic substances should have a refractive index in the range from 1.50 to 2.50. When the refractive index of the protective coating film 6 is too small, no full effect of enhancement can be obtained. A coating film having a refractive index larger than 2.50 can be obtained only with the sacrifice in the light transmission and mechanical strengths of the coating film adversely influencing on the performance and durability of the recording medium. It is also desirable that the protective coating film 6 has a refractive index as close as possible to that of the substrate plate 1 in order to decrease reflection of light 7 at the interface therebetween. When the substrate plate 1 is made from a polycarbonate resin having a refractive index of about 1.58, the refractive index of the protective coating film should not exceed, for example, 1.90. The refractive index of the protective coating film can be controlled to some extent by adequately controlling the film-forming conditions to give different molar ratios of the constituent elements in the coating film.

In the following, the improvement obtained by the present invention is described in more detail by way of examples and comparative examples.

Examples and Comparative Example.

A magneto-optical recording medium was prepared by successively forming, on one surface of a substrate plate of polycarbonate resin having a thickness of 1.2 mm, a first dielectric layer of hydrogen-containing silicon carbide having a thickness of 110 nm as formed by the method of sputtering, a magnetic layer of a ferrimagnetic alloy of terbium and iron having a thickness of 20 nm as formed by the sputtering method carried out with a high-frequency power of 200 watts in an atmosphere of argon of 0.007 Torr, a second dielectric layer of silicon carbide having a thickness of 30 nm as formed also by the method of sputtering and a reflecting layer of aluminum having a thickness of 50 nm as formed also by the method of sputtering. The optimum recording power input to this recording medium was 5.5 milliwatts. Ten as a total in number of such recording media were prepared, which are referred to as the media A, B, C, D, E, F, G, H, I and J hereinbelow.

The medium A was coated on the surface opposite to the first dielectric layer with an ultraviolet-curable acrylic resin using a spin coater followed by ultraviolet curing of the resin to give a protective resin layer having a thickness of 5 μm. The other nine recording media B to J were each coated on the surface opposite to the first dielectric layer with a coating film of (B) hydrogen-containing silicon carbide, (C) silicon carbide, (D) silicon nitride, (E) hydrogen-containing silicon carbide nitride, (F) hydrogen-containing silicon nitride, (G) titanium dioxide, (H) indium-tin oxide, (I) magnesium fluoride and (J) calcium fluoride, respectively, having a thickness of 200 nm by the sputtering method.

These ten magneto-optical recording media each provided with a protective coating film were subjected to the test of durability under adverse ambient conditions by keeping them in an atmosphere of 85% relative humidity at 85 °C with periodical measurement of the coercive force of the magnetic layer to give the results of the relative decrement of the coercive force shown in Figure 2 as a function of the time in hours. As is clear from this graph, the recording media B to J are much more stable than the medium A under the high-temperature, high-humidity conditions.

## Claims

1. In a magneto-optical recording medium having a multi-layered structure by successively forming a first dielectric layer, a ferrimagnetic layer, a second dielectric layer and a reflecting layer on the surface of a transparent substrate plate, an improvement which comprises: forming a protective coating film, on the surface of the substrate plate opposite to the surface in contact with the first dielectric layer, from an inorganic substance selected from the group consisting of silicon nitride, silicon carbide, titanium dioxide, indium-tin oxide, silicon nitride containing hydrogen, silicon carbide containing hydrogen, silicon carbide nitride containing hydrogen, calcium fluoride and magnesium fluoride.

2. The improvement as claimed in claim 1 in which the protective coating film has a thickness in the range from 10 to 2000 nm.

3. The improvement as claimed in claim 1 in which the protective coating film has a refractive index in the range from 1.50 to 2.50.

# FIG. 1

# FIG. 2